# EUROPEAN PATENT SPECIFICATION

(11) **EP 0 499 941 B1**
(45) Date of publication and mention of the grant of the patent: **10.04.1996**
(21) Application number: 92102217.4
(22) Date of filing: 10.02.1992
(51) Int. Cl.: C08F 240/00, C08F 6/02

(54) **Process for the preparation of colourless hydrocarbon resins and products obtained thereby**
Verfahren zur Herstellung von farblosen Kohlenwasserstoffharzen und nach diesem Verfahren hergestellte Produkte
Procédé pour la préparation de résines incolorés d'hydrocarbures et produits obtenus selon ce procédé

(30) Priority: 11.02.1991 IT MI910346
(43) Date of publication of application: 26.08.1992
(73) Proprietor: ENICHEM S.p.A., I-20124 Milano (IT)
(72) Inventor: Magni, Ambrogio, Dr., I-22050 Paderno d'Adda, Como (IT); Sioli, Attilio, I-20153 Milan (IT); Andena, Claudia, I-20071 Casalpusterlengo, Milan (IT); Ponzinibbi, Mario, I-20077 Vizzolo Predabissi, Milan (IT)
(74) Representative: Weinhold, Peter, Dr.

(56) References cited:
- EP-A- 0 035 896
- EP-A- 0 118 092
- EP-A- 0 412 597

## Description

The present invention relates to a process for the treatment of resins derived from unsaturated hydrocarbons and more specifically to a process for improving the colour and the thermal stability of said resins.

It is well-known that the cationic polymerization of unsaturated hydrocarbons with Friedel-Crafts catalysts allows the preparation of resinous materials. As an example of polymerizations starting from catalytic systems, reference can be made to the polymerization of mixtures of unsaturated C₄-C₅ monomers of the olefinic and diolefinic type or of the higher aliphatic, cycloaliphatic and aromatic type. Other examples of polymerizations by means of Friedel-Crafts catalytic systems are the polymerization and copolymerization of monomers of natural origin, such as terpenes, alone or in combination with other unsaturated organic compounds. These polymerizations are generally carried out in flow reactors (even though batch reactors or reactors of the semi flow kind may also be used) and in the presence of an inert diluent as the reaction normally is exothermic. However, with adequate stirring and cooling systems, the temperature can be controlled without having to use a diluent.

Various inert diluents for the polymerization reaction may be used. Representative examples thereof are aliphatic hydrocarbons such as pentane, hexane and heptane, aromatic hydrocarbons such as toluene and benzene, and residual unreacted hydrocarbons.

A wide temperature range may be used for the polymerization reaction. The polymerization is generally carried out at temperatures ranging from -20°C to +120°C, although the range from 0°C to 70°C is preferred.

The reaction pressure is not a critical factor and can be atmospheric, sub-atmospheric or super-atmospheric. Generally the reaction is most suitably carried out at the autogenous pressure generated in the reactor under the operating conditions adopted.

The reaction time is also not of particular importance and can vary from a few seconds to two or more hours. The resins thus obtained normally have a colour ranging from light yellow to brown, depending on the composition of the feed polymerized and the polymerization conditions, and are suitable for use in formulations for numerous commercial applications.

GB-A-835,788 discloses that the colour of hydrocarbon resins can advantageously be improved by controlling the water content of the hydrocarbon fractions subjected to polymerization and the quantity of Friedel-Crafts catalysts used.

More recently, European patent application No. 82 301 558 disclosed a process for the production of light-coloured resins which involves control of the content of cyclodiene monomers in the feed (lower than 0.5% by weight).

Aromatic resins having light colour and high thermal stability can be obtained by contacting the mixture to be polymerized with a dienophilic substance before the polymerization (US-A-4,102,843 and 4,230,840).

More specifically, basically colourless resins can be obtained by means of the cationic polymerization of pure monomers. For example, beta-pinene is converted into a colourless resin by polymerization with catalytic quantities of an organometallic compound of aluminium which does not contain any halogen and by activating the system through the addition of a controlled quantity of water and the subsequent addition of an organic halide (European patent application No. 84 308 674.5).

Light-coloured resins can also be obtained by means of the catalytic hydrogenation of hydrocarbon resins produced by cationic polymerization with Friedel-Crafts catalysts (GB-A-1,176,443). This method, however, has evident disadvantages which mainly are due to the change in the physico-chemical characteristics and the performance of the resin and to a rapid loss in the activity of the hydrogenation catalyst.

It is, therefore, evident that no general solution has yet been found for the obtainment of colourless hydrocarbon resins produced by cationic polymerization of unsaturated hydrocarbons.

A recent patent application (IT-A-21493A/89) describes a new method for the removal of catalytic residues based on aluminium trichloride from polymeric mixtures which involves the use of organometallic reagents. This method, apart from allowing the effective removal of the catalytic residues from the polymerized mixtures, affords resins having a higher thermal stability and lighter colour than known resins. These resins, however, still contain a coloured residue which, although very slight, does not allow said resins to be used for the production of end-products which require the complete absence of colour.

The present invention, consequently, relates to a general method for the obtainment of colourless and thermally stable resins from the polymerization products of ethylenically unsaturated hydrocarbons obtained by means of Friedel-Crafts catalysts which overcomes the above disadvantages and drawbacks of the prior art, and to the resins thus obtained.

It has, in fact, unexpectedly been found that the treatment of the mixtures resulting from the polymerization by means of Friedel-Crafts catalysts with an organometallic compound based on lithium and/or magnesium under suitable conditions, affords basically colourless hydrocarbon resins with a high thermal stability, all the other physico-chemical and performance properties of the resins remaining practically unchanged.

In accordance with this, the present invention relates to a process for the complete or almost complete decolorization of polymeric resins obtained through the polymerization of ethylenically unsaturated hydrocarbons by means of Friedel-Crafts catalysts, which process comprises the following basic steps:
(a) treatment of the polymerization mixture with an organometallic compound based on lithium and/or magnesium;
(b) treatment of the mixture resulting from step (a) with water or an aqueous solution of an acid or base;
(c) separation of the inorganic residues and recovery of the resin by removing the volatile organic materials.

The above process affords colourless or only very lightly-coloured resins having a high thermal stability.

The process of the present invention preferably comprises the addition of an organometallic compound selected from metal alkyls, metal alkyl hydrides and metal hydrides (usually the alkyl groups have from 1 to 6, especially 1 to 4 carbon atoms) of magnesium and/or lithium, to the mixtures resulting from the polymerisation reaction; n-butyl lithium, diethyl magnesium and di-n-butyl magnesium are particularly preferred for said purpose.

The above step (a) is generally carried out at temperatures ranging from -20°C to +120°C, although it is preferred to work at temperatures of from +20°C and +70°C.

The quantity of organometallic compound(s) to be used is in relation to the amount of Friedel-Crafts catalyst present in the polymerization mixture. A molar ratio of organometallic compounds to Friedel Crafts catalyst (e.g. AlCl₃) of at least 0.2:1 is generally used, although in order to obtain the best results it is preferable to use a molar ratio of at least 0.5:1 (e.g. about 1:1).

The reaction pressure is not a critical factor and can be atmospheric, sub-atmospheric or super-atmospheric. The reaction is generally carried out at the autogenous pressure created in the reactor under the operating conditions adopted.

The reaction time is also not of particular importance and reaction times varying from a few minutes to two or more hours, during which the progressive clarification of the mixture takes place are usually encountered.

The reaction can be carried out in flow, semi-flow or batch reactors.

The organometallic compound(s) can be used either in pure form or diluted with an inert diluent. Examples of suitable inert diluents (solvents) are aliphatic hydrocarbons such as pentane, hexane and heptane and aromatic hydrocarbons such as toluene and benzene.

A preferably equal volume of water or of an aqueous solution of an acid or base is then added to the resulting mixture. Said aqueous solutions are preferably from 0.5 to 5N (e.g. in sodium hydroxide). The temperature may be the same as in step (a) and preferably is room temperature. The reaction time usually ranges from 5 minutes to 2 hours, preferably under vigorous stirring. The settled organic phase, after the possible filtration of any inorganic solids formed during the treatment with the aqueous phase (these solids do not form at all or form only to a very limited extent when the product is washed with an aqueous solution of an acid), may then be distilled in a vapor stream heated to about 250°C in an inert nitrogen atmosphere to separate the volatile organic residues from the resin.

The resins obtainable by the above process may be employed in all fields of application described for resins of the prior art; among these are formulations for both solvent and hot melt adhesives, inks and oils.

The following examples are to further illustrate the present invention. In said examples all compositions and percentages are expressed by weight, if not specified otherwise.

### EXAMPLE 1 (comparative)

850 g of a selected fraction of hydrocarbon monomers from steam-cracking having the composition shown in Table 1 are placed into a 2 litre glass reactor equipped with cooling jacket and mechanical stirrer. Maintaining the temperature of the mixture at between +15°C and +30°C by means of a circulating cooling liquid, 10.2 g of AlCl₃ (76.7 moles) in the form of a complex with HCl and xylene (prepared separately by bubbling hydrochloric acid in a suspension of aluminium trichloride and xylene in a molar ratio of 1/1) are poured into the reactor under stirring and the resulting mixture is left to react for 40 minutes. The polymerized mixture is then transferred to a 3 litre glass flask equipped with mechanical stirrer and containing 800 grams of a vigorously stirred 4-molar aqueous solution of sodium hydroxide. After 30 minutes of treatment with the sodium hydroxide, the stirring is discontinued and the organic phase is left to separate from the aqueous phase.

The resin is then recovered from the polymeric solution by stripping the volatile materials in a steam flow at 250°C. The properties of the resins obtained are shown in column (I) of Table 2.

### EXAMPLE 2

850 g of the hydrocarbon fraction having the composition shown in Table 1 are polymerized under the same conditions as in example 1. At the end of the polymerization, 56.6 ml of a solution of di-n-butyl magnesium (0.67 molar in hexane) are added to the polymerized mixture and the reaction is continued for 15 minutes at a constant temperature of +120°C. The mixture clarified by the treatment with the magnesium compound is then transferred to a 3 litre glass flask equipped with mechanical stirrer and containing 800 g of a 4-molar aqueous solution of sodium hydroxide kept under vigorous stirring.

After 30 minutes of treatment with the sodium hydroxide, the stirring is discontinued and the organic phase is left to separate from the aqueous phase. The resin from the filtered organic phase is then recovered by stripping the volatile materials in a steam flow at 250°C. The properties of the resin obtained are shown in column (II) of Table 2.

### EXAMPLE 3

The procedure described in example 2 is followed, employing 113 ml of the 0.67 molar solution of (n-Bu)₂Mg. The properties of the resin obtained are shown in column (III) of Table 2.

### EXAMPLE 4

The procedure described in example 2 is followed, employing 226 ml of the 0.67 molar solution of di-n-butyl magnesium. The properties of the resin obtained are shown in column (IV) of Table 2.

### EXAMPLE 5

The procedure described in example 2 is followed, employing 23.9 ml of a 1.6 molar solution of n-butyl lithium in hexane instead of (n-Bu)₂Mg. The properties of the resin obtained are shown in column (V) of Table 2.

### EXAMPLE 6

The procedure of example 5 is followed, employing 47.8 ml of the 1.6 molar solution of n-BuLi in hexane. The properties of the resin obtained are shown in column (VI) of Table 2.

### EXAMPLE 7

The procedure of example 5 is followed, employing 95.8 ml of the 1.6 molar solution of n-BuLi in hexane. The properties of the resin obtained are shown in column (VII) of Table 2.

### EXAMPLE 8 (comparative)

850 g of a mixture composed of xylene (600 g), beta-pinene (195 g), alpha-pinene and other less reactive terpenes (55 g), are placed into a 2 litre glass reactor equipped with cooling jacket and mechanical stirrer. The mixture is polymerized by adding 2.23 g (16.8 mmoles) of AlCl₃ in the form of a complex with HCl and xylene, prepared according to the procedure described in example 1.

After 50 minutes, the polymerized mixture is transferred to a 3 litre glass flask equipped with mechanical stirrer and containing 800 g of 1 4-molar aqueous solution of sodium hydroxide kept under vigorous stirring. After 30 minutes of treatment with the sodium hydroxide, the stirring is discontinued and the organic phase is left to separate from the aqueous phase. The resin is then recovered from the polymeric solution by stripping the volatile materials in a steam flow at 250°C. The properties of the resin obtained are shown in column (I) of Table 3.

### EXAMPLE 9

850 g of a mixture composed of xylene (600 g), beta-pinene (195 g), alpha-pinene and other less reactive terpenes (55 g), are polymerized under the conditions described in example 8.

At the end of the polymerization, 65 ml of a solution of diethyl magnesium (0.52 molar in hexane) are added to the polymerized mixture and left to react for 15 minutes while keeping the temperature at 45°C.

The mixture clarified by the treatment with diethyl magnesium is then transferred to a 3 litre glass flask equipped with mechanical stirrer and containing 800 g of a 4 molar aqueous solution of sodium hydroxide kept under vigorous stirring.

After 30 minutes of treatment with the sodium hydroxide, the stirring is discontinued and the organic phase is left to separate from the aqueous solution.

The resin is then recovered from the filtered organic phase by stripping the volatile materials in a steam flow at 250°C.

The properties of the resin obtained, which is completely colourless, are shown in column (II) of Table 3.

**TABLE 1**

| COMPONENTS | WEIGHT % |
|---|---|
| 1-butene + isobutene | 1.51 |
| 1,3-butadiene | 3.01 |
| n-butane | 0.32 |
| trans-2-butene | 0.93 |
| cis-2-butene | 1.26 |
| 1,2-butadiene | 0.38 |
| 3-methyl-1-butene | 2.10 |
| isopentane | 7.65 |
| 1,4-pentadiene | 5.76 |
| 2-butine | 0.73 |
| 1-pentene | 10.63 |
| 2-methyl-1-butene | 2.99 |
| n-pentane | 18.65 |
| isoprene | 11.37 |
| trans-2-pentene | 7.60 |
| cis-2-pentene | 3.56 |
| 2-methyl-2-butene | 1.89 |
| trans-1,3-pentadiene | 7.10 |
| cyclopentadiene | 1.16 |
| cyclopentene | 5.76 |
| cis-1,3-pentadiene | 3.65 |
| various saturated products | 1.99 |

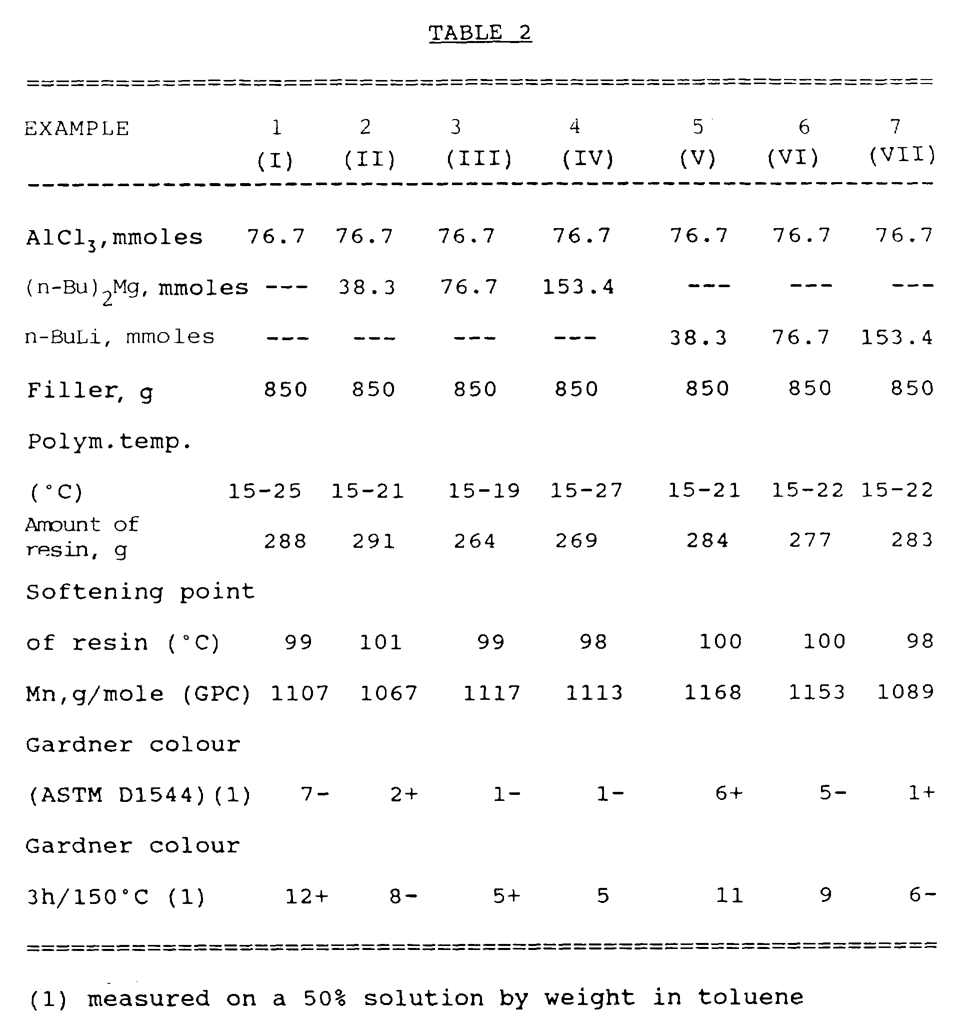

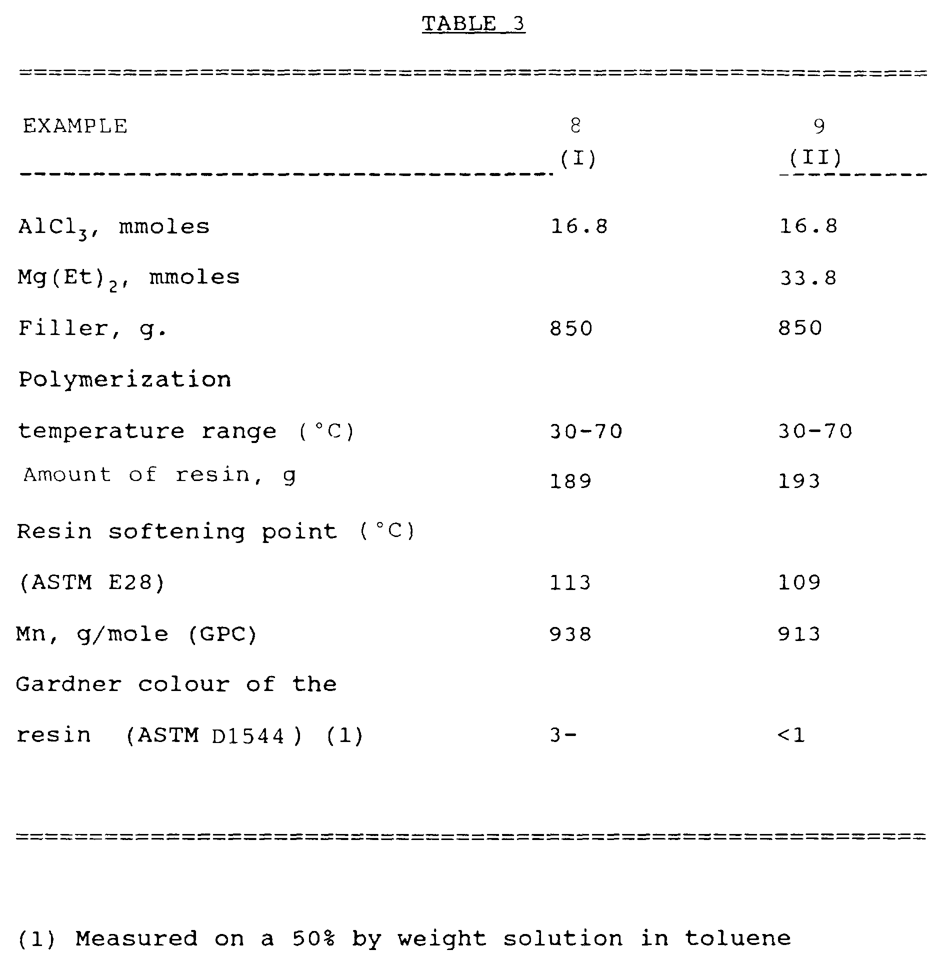

## Claims

1. Process for the decolorization of resins obtained by polymerization of ethylenically unsaturated hydrocarbons by means of Friedel-Crafts catalysts, comprising the following steps:
(a) treatment of the polymerization mixture with an organometallic compound based on lithium and/or magnesium;
(b) treatment of the mixture resulting from step (a) with water or an aqueous solution of an acid or base;
(c) separation and recovery of the organic material.

2. Process according to claim 1, wherein the organometallic compound is selected from metal alkyls, metal hydrides and metal alkyl hydrides of Li and Mg and mixtures thereof.

3. Process according to any one of claims 1 and 2, wherein the organometallic compound is selected from n-butyl lithium, diethyl magnesium, di-n-butyl magnesium and mixtures thereof.

4. Process according to any one of the preceding claims, wherein in step (a) the molar ratio of organometallic compound to Friedel-Crafts catalyst present in the polymerization mixture is at least 0.2:1 and preferably at least 0.5:1.

5. Process according to any one of the preceding claims, wherein step (a) is carried out at a temperature of from -20°C to +120°C.

6. Process according to any one of the preceding claims, wherein step (b) is carried out at room temperature.

7. Process according to any one of the preceding claims, wherein step (b) is carried out with a 0.5 to 5N acid or base solution.

8. Process according to any one of the preceding claims, wherein step (b) is carried out with a sodium hydroxide solution, particularly an about 4N sodium hydroxide solution.

## Patentansprüche

1. Verfahren zum Entfärben von Harzen, die durch Polymerisation von ethylenisch ungesättigten Kohlenwasserstoffen mit Hilfe von Friedel-Crafts-Katalysatoren erhalten wurden, welches die folgenden Schritte umfaßt:
(a) Behandlung der Polymerisationsmischung mit einer metallorganischen Verbindung auf der Basis von Lithium und/oder Magnesium,
(b) Behandlung der aus Schritt (a) resultierenden Mischung mit Wasser oder einer wäßrigen Lösung einer Säure oder Base,
(c) Abtrennen und Gewinnen des organischen Materials.

2. Verfahren gemäß Anspruch 1, worin die metallorganische Verbindung ausgewählt ist aus Metallalkylen, Metallhydriden und Metallalkylhydriden des Lithiums und Magnesiums und Mischungen derselben.

3. Verfahren gemäß irgendeinem der Ansprüche 1 und 2, worin die metallorganische Verbindung ausgewählt ist aus n-Butyllithium, Diethylmagnesium, Di-n-butylmagnesium und deren Gemischen.

4. Verfahren gemäß irgendeinem der vorhergehenden Ansprüche, worin in Schritt (a) das Molverhältnis von metallorganischer Verbindung zu in der Polymerisationsmischung vorhandenem Friedel-Crafts-Katalysator mindestens 0.2 : 1 und vorzugsweise mindestens 0.5 : 1 ist.

5. Verfahren gemäß irgendeinem der vorhergehenden Ansprüche, worin Schritt (a) bei einer Temperatur zwischen -20 °C und +120 °C durchgeführt wird.

6. Verfahren gemäß irgendeinem der vorhergehenden Ansprüche, worin Schritt (b) bei Raumtemperatur durchgeführt wird.

7. Verfahren gemäß irgendeinem der vorhergehenden Ansprüche, worin Schritt (b) mit einer 0.5 bis 5 N Säure- oder Baselösung durchgeführt wird.

8. Verfahren gemäß irgendeinem der vorhergehenden Ansprüche, worin Schritt (b) mit einer Natriumhydroxidlösung, insbesondere einer 4 N Natriumhydroxidlösung, durchgeführt wird.

## Revendications

1. Procédé destiné à la décoloration de résines obtenues par polymérisation d'hydrocarbures à insaturations éthyléniques, à l'aide de catalyseurs de Friedel et Crafts, comprenant les étapes suivantes :
(a) traitement du mélange de polymérisation avec un composé organométallique à base de lithium et/ou de magnésium ;
(b) traitement du mélange résultant de l'étape (a) avec de l'eau ou une solution aqueuse d'un acide ou d'une base ;
(c) séparation et récupération du matériau organique.

2. Procédé selon la revendication 1, dans lequel le composé organométallique est choisi parmi les composés de type alkyl-métal, hydrure de métal et hydrure d'alkyl-métal de Li et Mg, et des mélanges de ces composés.

3. Procédé selon l'une quelconque des revendications 1 et 2, dans lequel le composé organométallique est choisi parmi le n-butyl-lithium, le diéthyl-magnésium, le di-n-butyl-magnésium, et des mélanges de ces derniers.

4. Procédé selon l'une quelconque des revendications précédentes, dans lequel dans l'étape (a), le rapport molaire du composé organométallique au catalyseur de Friedel et Crafts présent dans le mélange de polymérisation vaut au moins 0,2:1, et de préférence au moins 0,5:1.

5. Procédé selon l'une quelconque des revendications précédentes, dans lequel l'étape (a) est réalisée à une température comprise entre -20°C et +120°C.

6. Procédé selon l'une quelconque des revendications précédentes, dans lequel l'étape (b) est réalisée à température ambiante.

7. Procédé selon l'une quelconque des revendications précédentes, dans lequel l'étape (b) est réalisée avec une solution 0,5 à 5 N d'acide ou de base.

8. Procédé selon l'une quelconque des revendications précédentes, dans lequel l'étape (b) est réalisée avec une solution d'hydroxyde de sodium, en particulier une solution d'environ 4 N d'hydroxyde de sodium.
